# EUROPÄISCHE PATENTANMELDUNG

(11) **EP 1 564 576 A1**
(43) Veröffentlichungstag der Anmeldung: **17.08.2005**
(21) Anmeldenummer: 05001083.4
(22) Anmeldetag: 20.01.2005
(51) Int. Cl.: G02B 23/16, G02B 23/18, F16M 11/04

(54) **Stativadapter für Fernrohre und binokulare Fernrohre**

(30) Priorität: 13.02.2004 DE 102004008454
(71) Anmelder: Hensoldt AG, 35576 Wetzlar (DE)
(72) Erfinder: Becker, Markus, Dr., 35606 Solms (DE); Claudi, Volker, 35633 Lahnau (DE); Felgenhauer, Klaus, 35581 Wetzlar (DE)
(74) Vertreter: Witte, Alexander, Dr.-Ing.

(57) **Zusammenfassung**

Ein Stativadapter (10) für ein Fernrohr (12) sowie ein binokulares Fernrohr (12) werden beschrieben. Der Stativadapter (10) weist eine Auflagefläche (32) für das Fernrohr (12) auf sowie ein Band (40) zum Fixieren des Fernrohres (12) auf der Auflagefläche (32). Die Auflagefläche (32) ist mindestens abschnittsweise bogenförmig ausgebildet, derart, dass bei einem binokularen Fernrohr (12) die Tuben (14a, 14b) des Fernrohres (12) auf bogenförmigen Abschnitten der Auflagefläche (32) aufliegen (Fig. 1).

## Beschreibung

Die Erfindung betrifft einen Stativadapter für ein Fernrohr, mit einer Auflagefläche für das Fernrohr und mit einem Band zum Fixieren des Fernrohres auf der Auflagefläche.

Die Erfindung betrifft ferner ein binokulares Fernrohr mit einem Stativadapter, wobei der Stativadapter eine Auflagefläche für das Fernrohr aufweist sowie ein Band zum Fixieren des Fernrohres auf der Auflagefläche.

Ein Stativadapter sowie ein binokulares Fernrohr der vorstehend genannten Art sind aus der US 5,221,991 bekannt.

Stativadapter dienen zum Befestigen eines Fernrohres auf einem Stativ, beispielsweise einem Dreibein. Herkömmliche Stativadapter für monokulare oder binokulare Fernrohre sind so ausgebildet, dass sie an der Unterseite des Fernrohres befestigt werden und wiederum auf ihrer Unterseite eine Gewinde bereitstellen, das wie ein Gewinde auf der Unterseite einer Film- oder Fotokamera ausgebildet ist. Auf diese Weise kann das Fernrohr über den Stativadapter auf den Kopf des Statives aufgeschraubt werden. Der Kopf des Statives ist wiederum üblicherweise in einer oder in mehreren Ebenen verschwenkbar. Das auf dem Stativ befindliche Fernrohr kann damit in einer bestimmten Orientierung fixiert werden.

Diese bekannten Stativadapter haben den Nachteil, dass das Fernrohr von Hause aus mit einem standardisierten Befestigungsmittel für den Stativadapter ausgestattet sein muss. Nur solche Ferngläser können zusammen mit einem solchen Stativadapter verwendet werden.

Der eingangs erwähnte bekannte Stativadapter gemäß der US 5,221,991 weist eine ebene, metallische Platte auf. Auf dieser Platte befindet sich eine dicke Schicht aus Schaumgummi, die mit zwei länglichen Mulden für die Tuben eines binokularen Fernrohres versehen sein kann. Zwischen den beiden Mulden ist die Mitte eines flexiblen Bandes an der metallischen Platte befestigt. Die freien Enden des Bandes sind als Klettbänder ausgebildet und können durch seitliche Schlitze in der metallischen Platte gesteckt werden. Auf diese Weise bilden die beiden freien Ende der Bänder Schlaufen zum Fixieren der in den Mulden liegenden Tuben des Fernglases.

Dieser bekannte Stativadapter hat damit den Nachteil, dass er nur für solche Ferngläser verwendbar ist, deren Tuben sich von der Brücke relativ weit frei erstrecken. Er ist auch umständlich in der Handhabung, weil die Tuben durch die Schlaufen hindurch gesteckt werden und dann einzeln fixiert werden müssen.

Aus der US 4,557,451 ist ein weiterer Stativadapter für ein binokulares Fernglas bekannt. Bei diesem Adapter ist ebenfalls eine Platte vorgesehen, deren Oberseite mit zwei länglichen, parallelen Mulden versehen ist, die als Negativform an die Form der Tuben des Fernglases angepasst sind. Um das Fernglas auf der Auflage zu fixieren, ist ein Band vorgesehen, dessen eines Ende auf der einen Seite der Auflage befestigt ist und dessen anderes Ende mit einem Klettelement auf der gegenüberliegenden Seite der Auflage befestigt werden kann, wobei das Band das zuvor in die Mulden eingelegte Fernglas im mittleren Bereich der Tuben umschlingt.

Dieser bekannte Stativadapter hat den Nachteil, dass er durch seine Form nur für Ferngläser mit der entsprechenden Gegenform verwendet werden kann. Er ist daher nur als Zubehörteil für ein ganz bestimmtes Fernrohr brauchbar. Zwar wird das Fernglas auf dem Stativadapter fest gehalten, es ist jedoch nicht oder allenfalls sehr begrenzt möglich, den Pupillenabstand des Fernglases zu verändern. Wenn die Mulden zum Zwecke der Veränderbarkeit des Pupillenabstandes größer dimensioniert würden, hätte dies zur Folge, dass der Pupillenabstand nicht stabil ist sondern sich insbesondere beim Festzurren des Bandes wieder verstellen könnte. Da der bekannte Stativadapter nur für ein spezielles Fernglas verwendet werden kann, muss ein Hersteller von mehreren unterschiedlichen Ferngläsern jeweils einen speziellen Stativadapter für jedes unterschiedlich geformte Fernglas anbieten, was unter Kostengesichtspunkten nachteilig ist.

Der Erfindung liegt daher die Aufgabe zugrunde, einen Stativadapter sowie ein binokulares Fernrohr der eingangs genannten Art dahingehend weiterzubilden, dass diese Nachteile vermieden werden. Insbesondere soll der Stativadapter bei sehr unterschiedlichen Fernrohren einsetzbar sein. Ferner soll es möglich sein, das Fernrohr auf dem Stativadapter befestigen und zugleich in seinem Pupillenabstand so weit verstellen zu können, wie dies von den Gegebenheiten des Fernrohrs möglich ist. Dabei soll gewährleistet sein, dass der eingestellte Pupillenabstand bei der Verwendung des Stativadapters, insbesondere beim Festzurren des Fernglases, nicht wieder verstellt wird.

Bei einem Stativadapter der eingangs genannten Art wird diese Aufgabe erfindungsgemäß dadurch gelöst, dass die Auflagefläche mindestens abschnittsweise bogenförmig ausgebildet ist.

Bei einem binokularen Fernrohr der eingangs genannten Art wird die Aufgabe erfindungsgemäß dadurch gelöst, dass die Auflagefläche mindestens abschnittsweise bogenförmig ausgebildet ist, derart, dass Tuben des Fernrohres auf bogenförmigen Abschnitten der Auflagefläche aufliegen.

Die der Erfindung zugrunde liegende Aufgabe wird auf diese Weise vollkommen gelöst. Durch die gebogene Form der Auflagefläche kann nämlich nahezu jedes übliche Fernglas auf der Auflagefläche aufgelegt und dort fixiert werden. Eine Einschränkung auf bestimmte Typen von Ferngläsern besteht nicht. Vielmehr können kleine Taschenferngläser, mittelgroße Ferngläser, aber auch große Ferngläser mit Porro-Prismen gleichermaßen eingesetzt werden.

Dies gilt insbesondere für binokulare Ferngläser mit zwei Tuben. Die beiden Tuben liegen nämlich nebeneinander auf der gebogenen Auflage auf, unabhängig von deren Größe, Bauform oder Abstand zueinander.

Bei einer bevorzugten Weiterbildung des erfindungsgemäßen Stativadapters ist die Auflagefläche durchgehend gebogen ausgebildet.

Diese Maßnahme hat den Vorteil, dass die Auflagefläche in einfacher und kostengünstiger Weise hergestellt werden kann.

Die Auflagefläche ist in diesem Falle bevorzugt durchgehend konvex gebogen ausgebildet.

Dies hat den Vorteil, dass eine Selbstzentrierung des Fernglases stattfindet, weil die Krümmung der Auflagefläche und die Spannung des Bandes entgegengesetzt wirken. Der eingestellte Pupillenabstand stabilisiert sich damit selbsttätig.

In diesem Zusammenhang ist weiter bevorzugt, wenn die Auflagefläche im Querschnitt kreisbogenförmig ist, insbesondere, wenn der Kreisbogen einen Radius (R) im Bereich von 30 bis 150 mm aufweist, vorzugsweise 40 bis 80 mm, insbesondere ca. 60 mm.

Diese Maßnahmen haben den Vorteil, dass die Auflagefläche in noch einfacherer und kostengünstigerer Weise hergestellt werden kann. Die genannten Radien haben sich in Versuchen für eine große Bandbreite von üblichen Ferngläsern als optimal erwiesen.

Bei einer weiteren Gruppe von Ausführungsbeispielen der Erfindung weist die Auflagefläche die Form eines Konus auf, wobei der Konuswinkel gleich dem Winkel ist, den eine optische Achse des Fernrohres mit Auflagelinien eines Tubus des Fernrohres auf der Auflagefläche bildet. Dies schließt den Extremfall eines zylindrischen Tubus ein, bei dem der Konuswinkel Null ist.

Diese Maßnahme hat den Vorteil, dass die optische Achse bzw. Achsen des Fernglases bei einem horizontal eingestellten Stativkopf ebenfalls horizontal verläuft bzw. verlaufen, weil die ggf. vorliegende Konusform des Tubus bzw. der Tuben durch die Formgebung der Auflagefläche kompensiert wird.

In besonderen Fällen kann die Auflagefläche natürlich auch anders geformt sein, beispielsweise kann die Auflagefläche im Querschnitt ellipsenbogenförmig sein.

Eine besonders gute Wirkung wird ferner dann erzielt, wenn die Auflagefläche mit einer rutschhemmenden Beschichtung versehen ist, z. B. indem die Beschichtung als Gummiauflage ausgebildet ist.

Diese Maßnahme trägt dazu bei, dass eine unerwünschte Verstellung des Pupillenabstandes beim Festzurren des Fernglases auf dem Stativadapter vermieden wird. Ferner ist bei effektiver Rutschhemmung die notwendige Zurrkraft geringer.

Bevorzugt ist ferner, wenn das Band elastisch ist, insbesondere dann, wenn Mittel zum Einstellen einer Zugkraft in dem Band vorgesehen sind.

Diese Maßnahme hat den Vorteil, dass die Zurrkraft feinfühlig und dosiert eingestellt werden kann.

Bei weiteren Ausführungsbeispielen der Erfindung ist die Auflagefläche auf einer Auflage ausgebildet, wobei die Auflage von einem langgestreckten Haltearm gehalten wird, der sich im Wesentlichen senkrecht zur Auflagefläche erstreckt. Dabei ist der Haltearm vorzugsweise abgekröpft.

Diese Maßnahme hat den Vorteil, dass ein mechanisch stabiles Gebilde entsteht, bei dem die notwendigen Handgriffe leicht ausgeführt werden können. Die Abkröpfung des Haltearmes hat den Vorteil, dass das Fernglas damit leicht außerhalb der Achse des Statives liegt und vom Benutzer besser eingesehen werden kann.

Es wurde bereits festgestellt, dass der erfindungsgemäße Stativadapter sowohl für monokulare wie auch für binokulare Fernrohre verwendbar ist. Besonders bevorzugt ist jedoch, wenn das Fernrohr ein binokulares Fernrohr ist, dessen Tuben auf bogenförmigen Abschnitten der Auflagefläche aufliegen.

Weitere Vorteile ergeben sich aus der Beschreibung und der beigefügten Zeichnung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine Vorderansicht eines Ausführungsbeispiels eines erfindungsgemäßen Stativadapters für ein Fernrohr;
- Fig. 2: eine extrem schematisierte Seitenansicht des Stativadapters gemäß Fig. 1, in verkleinertem Maßstab;
- Fig. 3: eine perspektivische Ansicht des Stativadapters gemäß Fig. 1, jedoch zusammen mit einem anderen Fernrohr.

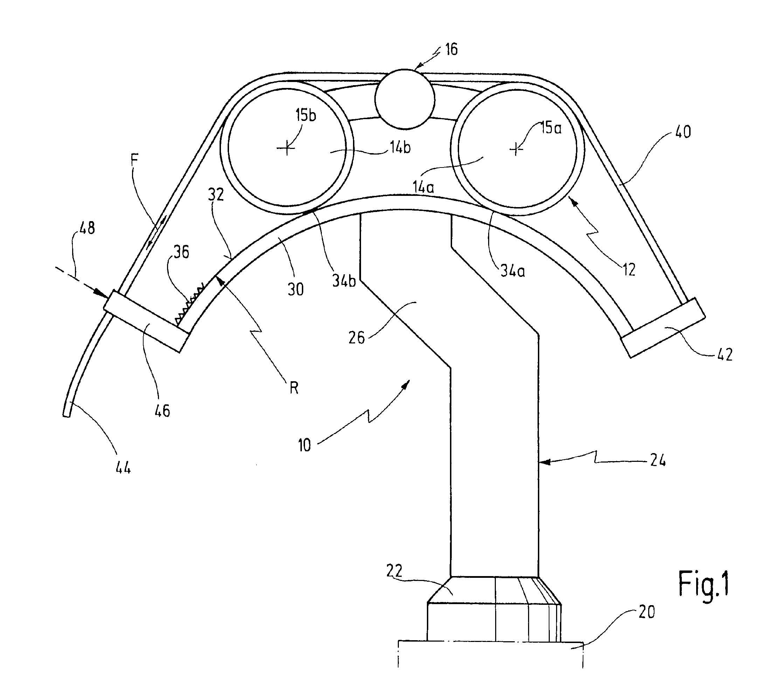

In Fig. 1 bezeichnet 10 als Ganzes einen Stativadapter. Der Stativadapter 10 dient zum Befestigen eines Fernrohres 12 auf einem Stativ üblicher Bauart (nicht dargestellt). In dem in Fig. 1 gezeigten Ausführungsbeispiel ist das Fernrohr 12 ein binokulares Fernrohr, was jedoch nicht zwingend ist, weil der Stativadapter 10 auch bei monokularen Fernrohren einsetzbar ist.

Das Fernrohr 12 ist von herkömmlicher Bauart. Es weist zwei Tuben 14a und 15b auf, die über eine Knickbrücke 16 miteinander verbunden sind. Die optischen Achsen der Tuben 14a, 14b sind mit 15a und 15b bezeichnet.

Der Stativadapter 10 wird im Einsatz auf einen in Fig. 1 nur schematisch angedeuteten Stativkopf 20 aufgesetzt, beispielsweise mittels eines Adapterstückes 22 aufgeschraubt. Das Adapterstück 22 befindet sich am Fuß eines Haltearms 24. Der Haltearm 24 ist langgestreckt und verläuft im Wesentlichen vertikal. Er ist bei 26 abgekröpft. Das obere Ende des Haltearms 24 trägt eine quer zum Haltearm 24 verlaufende, bogenförmige und starre Auflage 30, deren obere Auflagefläche mit 32 bezeichnet ist. Die Auflagefläche 32 kann dabei durchgehend oder nur abschnittsweise bogenförmig ausgebildet sein.

Die Auflagefläche 32 ist im Vertikalschnitt, wie dargestellt, nach oben konkav ausgebildet, sie kann aber für bestimmte Anwendungen auch konvex sein. Wichtig ist, dass sie gebogen ist. Die Bogenform ist bevorzugt die eines Kreisbogens. Der Krümmungsradius des Kreises kann dabei im Bereich von 30 bis 150 mm liegen, vorzugsweise im Bereich von 40 bis 80 mm, insbesondere bei ca. 60 mm. Andere Bogenformen sind auch möglich, beispielsweise die Form eines Ellipsenbogens.

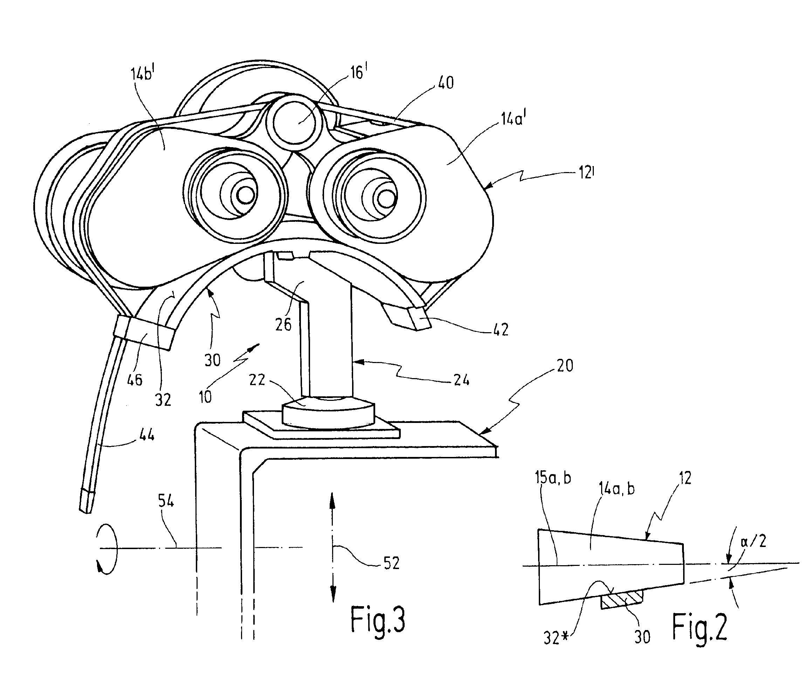

Im Axialschnitt kann die Auflagefläche 32 eben, also in einer Normalstellung horizontal verlaufen. Da viele Ferngläser jedoch konisch geformte Tuben aufweisen, ist für diese Fälle eine Ausführungsform bevorzugt, wie sie in Fig. 2 extrem schematisch dargestellt ist.

Man sieht dort die konischen Tuben 14a, 14b, deren Konuswinkel α beträgt. In diesem Falle ist die Auflagefläche 32* im Axialschnitt um den Winkel α/2 angestellt, damit das Fernrohr 12 mit seinen optischen Achsen 15a, 15b in der Normalstellung horizontal ausgerichtet ist. Die Auflagefläche 32* hat dann eine konische Form.

In jedem Falle liegen, wie Fig. 1 zeigt, die Tuben 14a, 14b über Auflagepunkte bzw. -linien 34a, 34b auf der Auflagefläche 32 auf. Wenn die Auflagefläche 32 nur abschnittsweise bogenförmig ausgebildet ist (nicht dargestellt), müssen die Auflagepunkte 34a, 34b in diesen bogenförmigen Abschnitten liegen. Damit die Tuben 14a, 14b dabei nicht verrutschen und sich dadurch der Pupillenabstand ändert, ist die Auflagefläche 32 vorzugsweise mit einer rutschhemmenden Beschichtung 36 versehen, beispielsweise einer Gummiauflage.

Zum Fixieren des Fernrohres 12 auf der Auflagefläche 32 dient ein Band 40. Das Band 40 ist vorzugsweise elastisch und z.B. als Gummiband ausgebildet. Das Band 40 ist an seinem in Fig. 1 rechten Ende an einem ersten Endstück 42 der Auflage 30 befestigt. Das gegenüberliegende freie Ende 44 des Bandes 40 ist durch ein zweites Endstück 46 am gegenüberliegenden Ende der Auflage 30 geführt und kann dort mittels einer Fixiereinrichtung 48 form- oder kraftschlüssig festgelegt werden. Durch gezieltes und dosiertes Spannen des Bandes 40 vor dem Festlegen kann die Zugkraft F in dem Band 40 eingestellt werden. Die Zugkraft F und der Radius R wirken sich gegenteilig auf die Fixierung des Fernglases 12 auf der Auflagefläche 32 aus. Durch geeignete Dosierung der Zugkraft F kann daher das Fernglas in einer bestimmten Stellung der Knickbrücke 16, d.h. mit einem bestimmten Pupillenabstand, stabil fixiert werden.

Die tragenden Elemente 22, 24, 30, 42 und 44 des Stativdadapters 10 bestehen vorzugsweise aus Leichtmetall oder Kunststoff.

In Fig. 3 ist perspektivisch eine Situation dargestellt, in der ein großes Fernglas 12' mit Porro-Prismen auf dem selben Stativadapter 10 fixiert ist. Man erkennt leicht, dass dies problemlos möglich ist und dass sich die größeren Abmessungen des Fernglases 12' lediglich in einem anderen Verlauf des Bandes 40 auswirken.

Ferner ist in Fig. 3 angedeutet, dass der Stativkopf 20 in mehreren Achsen verstellbar sein kann, also z.B. entlang einer Vertikalachse 52 verschiebbar oder um eine Horizontalachse 54 verdrehbar.

## Patentansprüche

1. Stativadapter für ein Fernrohr (12), mit einer Auflagefläche (32) für das Fernrohr (12) und mit einem Band (40) zum Fixieren des Fernrohres (12) auf der Auflagefläche (32), **dadurch gekennzeichnet, dass** die Auflagefläche (32) mindestens abschnittsweise bogenförmig ausgebildet ist.

2. Stativadapter nach Anspruch 1, **dadurch gekennzeichnet, dass** die Auflagefläche (32) durchgehend gebogen ausgebildet ist.

3. Stativadapter nach Anspruch 2, **dadurch gekennzeichnet, dass** die Auflagefläche (32) durchgehend konvex gebogen ausgebildet ist.

4. Stativadapter nach Anspruch 3, **dadurch gekennzeichnet, dass** die Auflagefläche (32) im Querschnitt kreisbogenförmig ist.

5. Stativadapter nach Anspruch 4, **dadurch gekennzeichnet, dass** der Kreisbogen einen Radius (R) im Bereich von 30 bis 150 mm aufweist, vorzugsweise 40 bis 80 mm, insbesondere ca. 60 mm.

6. Stativadapter nach Anspruch 8 oder 9, **dadurch gekennzeichnet, dass** die Auflagefläche (32) die Form eines Konus aufweist, wobei der Konuswinkel (α/2) gleich dem Winkel ist, den eine optische Achse (50a, 50b) des Fernrohres (12) mit Auflagelinien (34a, 34b) eines Tubus (14a, 14b) des Fernrohres (12) auf der Auflagefläche (32) bildet.

7. Stativadapter nach Anspruch 6, **dadurch gekennzeichnet, dass** der Konuswinkel (α/2) Null ist.

8. Stativadapter nach Anspruch 3, **dadurch gekennzeichnet, dass** die Auflagefläche (32) im Querschnitt ellipsenbogenförmig ist.

9. Stativadapter nach einem oder mehreren der Ansprüche 1 bis 8, **dadurch gekennzeichnet, dass** die Auflagefläche (32) mit einer rutschhemmenden Beschichtung (26) versehen ist.

10. Stativadapter nach Anspruch 9, **dadurch gekennzeichnet, dass** die Beschichtung (26) als Gummiauflage ausgebildet ist.

11. Stativadapter nach einem oder mehreren der Ansprüche 1 bis 10, **dadurch gekennzeichnet, dass** das Band (40) elastisch ist.

12. Stativadapter nach Anspruch 11, **dadurch gekennzeichnet, dass** Mittel (46, 48) zum Einstellen einer Zugkraft (F) in dem Band (40) vorgesehen sind.

13. Stativadapter nach einem oder mehreren der Ansprüche 1 bis 12, **dadurch gekennzeichnet, dass** die Auflagefläche (32) auf einer Auflage (30) ausgebildet ist, und dass die Auflage (30) von einem langgestreckten Haltearm (24) gehalten wird, der sich im Wesentlichen senkrecht zur Auflagefläche (32) erstreckt.

14. Stativadapter nach Anspruch 13, **dadurch gekennzeichnet, dass** der Haltearm (24) abgekröpft (26) ist.

15. Stativadapter nach einem oder mehreren der Ansprüche 1 bis 14, **dadurch gekennzeichnet, dass** das Fernrohr (12) ein binokulares Fernrohr (12) ist, dessen Tuben (14a, 14b) auf bogenförmigen Abschnitten der Auflagefläche (32) aufliegen.

16. Stativadapter für ein binokulares Fernrohr (12), mit einer Auflagefläche (32) für die Tuben (14a, 14b) des Fernrohrs (12) und mit einem Band (40) zum Fixieren des Fernrohres (12) auf der Auflagefläche (32), **dadurch gekennzeichnet, dass** die Auflagefläche (32) durchgehend bogenförmig ausgebildet ist, derart, dass beide Tuben (14a, 14b) nebeneinander auf der durchgehend bogenförmigen Auflagefläche (32) aufliegen.

17. Binokulares Fernrohr (12) mit einem Stativadapter (12), wobei der Stativadapter (12) eine Auflagefläche (32) für das Fernrohr (12) aufweist sowie ein Band (40) zum Fixieren des Fernrohres (12) auf der Auflagefläche (32), **dadurch gekennzeichnet, dass** die Auflagefläche (32) mindestens abschnittsweise bogenförmig ausgebildet ist, derart, dass Tuben (14a, 14b) des Fernrohres (12) auf bogenförmigen Abschnitten der Auflagefläche (32) aufliegen.

18. Binokulares Fernrohr (12) mit einem Stativadapter (12), wobei der Stativadapter (12) eine Auflagefläche (32) für das Fernrohr (12) aufweist sowie ein Band (40) zum Fixieren des Fernrohres (12) auf der Auflagefläche (32), **dadurch gekennzeichnet, dass** die Auflagefläche (32) durchgehend bogenförmig ausgebildet ist, derart, dass Tuben (14a, 14b) des Fernrohres (12) nebeneinander auf der durchgehend bogenförmigen Auflagefläche (32) aufliegen.
